# EUROPÄISCHE PATENTANMELDUNG

(11) **EP 1 240 966 A2**
(43) Veröffentlichungstag der Anmeldung: **18.09.2002**
(21) Anmeldenummer: 02005458.1
(22) Anmeldetag: 09.03.2002
(51) Int. Cl.: B23F 21/22

(54) **Stabmesserkopf zum Verzahnen von Spiralkegelrädern**

(30) Priorität: 12.03.2001 DE 10112165
(71) Anmelder: Richardt Rainer, 99817 Eisenach (DE)
(72) Erfinder: Richardt Rainer, 99817 Eisenach (DE)
(74) Vertreter: Schneider, Manfred, Dipl.-Ing.

(57) **Zusammenfassung**

Die Erfindung betrifft einen Stabmesserkopf zum Verzahnen von Spiralkegelrädern, bestehend aus einem scheibenförmigen Messerträger mit im wesentlichen kreisförmig angeordneten, die Scheibe des Messerträgers (1) durchdringenden Durchbrüchen (12), mit unregelmäßigen Querschnitten zur Aufnahme und Führung der Stabmesser (2), mit Spannschrauben (4) zur Fixierung der Stabmesser (2) im Messerträger (1) und mit Spannmitteln (3) für die Stabmesser (2) zwischen den Stabmessern (2) und den Spannschrauben (4). Mit dem Ziel, bei hoher Qualität der Spannung der Stabmesser, die Herstellung der Messeraufnahmen zu vereinfachen, werden die Querschnitte der Durchbrüche (12, 12a, 12i) im Messerkopf (1) zusammengesetzt aus einem halbkreisförmigen Durchbruchabschnitt (121a, 121i) und aus einem prismatischen Durchbruchabschnitt (122a,122i) mit überwiegend in radialer Richtung sich nach innen keilförmig einander annähernden Begrenzungsflächen (Keilfläche 31, Stützfläche 32). Die Stabmesser (2; 2a, 2a'; 2i, 2i') werden mit ihrem halbrunden Schaft in den halbkreisförmigen Querschnitt (121a, 121i) und die Spannmittel (3;3a, 3i), ausgebildet als im Querschnitt keilförmige Stäbe, in den prismatischem, keilförmigem Durchbruchabschnitt (122a, 122i) eingefügt. Die Spannschrauben (4) sind etwa radial ausgerichtet und auf die Spannmittel (3) ausgerichtet.

## Beschreibung

Die Erfindung betrifft einen Stabmesserkopf zum Verzahnen von Spiralkegelrädern, bestehend aus einem scheibenförmigen Messerträger mit im Wesentlichen kreisförmig angeordneten, die Scheibe durchdringenden Durchbrüchen, mit unregelmäßigen Querschnitten zur Aufnahme und Führung der Stabmesser, mit Spannschrauben zur Fixierung der Stabmesser im Messerträger und mit Spannmitteln für die Stabmesser zwischen den Stabmessern und den Spannschrauben.

Ein Stabmesserkopf der eingangs genannten Art ist u. a. durch die WO 99/41035 bekannt geworden. Der Messerkopf besitzt in einem zentralen, ringförmigen Abschnitt eine Vielzahl von im Wesentlichen axial ausgerichteten Durchbrüchen mit einem fünfeckigen, prismatischen Querschnittsprofil. Radial innen ist dieses Querschnittsprofil zum Einen durch eine etwa 60° zum Radius geneigte Positionierungsfläche und dazu anschließend eine Zweite, etwa um 30° zum Radius geneigte zweite Positionierungsfläche vorgesehen. Ein ebenfalls fünfeckiger Schaft eines Stabmessers wird mit kongruenten Flächen radial nach innen belastet und dabei auf diese genannten Positionierungsflächen gepresst. Zu diesem Zweck wird radial außerhalb des Messerschaftes ein Spannmittel in der gleichen Ausnehmung etwa radial gleitend geführt. Eine im äußeren Ringbereich des Messerkopfes in einer Gewindebohrung geführte Spannschraube belastet das Spannelement und drückt die geneigten Flächen des Schaftes auf die Positionierungsfächen mit den unterschiedlichen Winkeln.

Eine derartige Verspannung der Stabmesser gewährleistet eine sehr gute Positionierung des Messers auch bei hohen Schnittkräften. Die z. B. damit hergestellten bogenverzahnten Kegelräder besitzen eine hohe Qualität.

Nachteilig ist bei dieser Ausführung jedoch, dass die Herstellung der prismatischen Ausnehmung mit den erforderlichen Genauigkeiten einen sehr hohen Aufwand erfordert. Der Messerkopf wird deshalb aus zwei Teilen gefertigt, nämlich einem inneren Grundkörper und einem äußern Spannring.
Der innere Grundkörper wird während des Herstellungsprozesses zunächst außen mit sich im wesentlichen radial erstreckenden prismatischen Nuten versehen. Diese Nuten können gefräst werden. Dem Fräsvorgang folgt dann mindestens für die Positionierungsflächen ein entsprechender Schleifvorgang und ggf. ein Arbeitsgang zur Feinstbearbeitung der Positionierungsflächen.

Der äußere Spannring wird ebenfalls mit Nuten versehen. Diese Nuten sind innen angeordnet und dienen der Aufnahme von Vorsprüngen der Stege, die zwischen den Nuten des Grundkörpers verblieben sind. Des weiteren werden in den Spannring Bohrungen eingebracht, die mit Gewinde versehen sind und später die Spannschrauben aufnehmen.

Nach dieser Vorbereitung der beiden Teile wird der Spannring axial auf den inneren Grundkörper gepresst und durch eine Schweißnaht bleibend mit diesem verbunden. Ein derartiger Aufbau hat erhebliche Nachteile - vor allem im Bereich seiner Herstellung. Nach dem Schweißvorgang können sich Teile des Grundkörpers und/oder des Spannringes durch Wärmespannungen verziehen.

Es sind relativ häufig Nacharbeiten an den harten, winkligen Positionierungsflächen der Nut erforderlich. Ein weiterer Nachteil besteht darin, dass die zur Ausbildung zweier einander benachbarter Zahnflanken erforderlichen Stabmesser ein voneinander abweichendes Querschnittsprofil aufweisen müssen.

Durch die EP 0 813 927 A2 ist eine weitere Form eines Stabmesserkopfes bekannt geworden. Der scheibenförmig ausgebildete Messerkopf ist entlang einer etwa kreisförmigen Bahn mit zylindrischen Bohrungen versehen, die zur Aufnahme im wesentlichen runder Messerschäfte dienen. Die Messerschäfte der Stabmesser sind in einem Winkel entlang eines Sehnenbereiches abgeflacht. Dieser Sehnenbereich ist so ausgerichtet, dass er mit der Spanfläche des Messers in einer Ebene liegt.

Zur Befestigung dieses runden Messerschaftes sind im Messerkopf Bohrungen etwa in radialer Richtung vorgesehen, die die Bohrungen zur Aufnahme des Messerschaftes etwa im Bereich ihrer Tangente kreuzen. In diese Bohrungen werden ziehende oder stoßende Keile eingebracht, die das jeweilige Stabmesser mit seiner Spanfläche auf unterschiedliche Richtungen zum Radius des Messerkopfes ausrichten.

Die stoßenden Keile werden mittels Druckschrauben, die im Gewinde des Messerkopfes verankert sind, gegen die Spannfläche gedrückt. Die ziehenden Keile durchgreifen Bohrungen im äußeren Bereich des Grundkörpers frei und werden durch eine Mutter mit Scheibe derart mit dem Grundkörper verspannt, dass der Keil nach außen gezogen wird.

Ein derartiger Messerkopf ist zwar billiger in der Herstellung als die vorher beschriebene Ausführung. Sie hat jedoch einen entscheidenden Nachteil, der darin besteht, dass die Klemmfläche der stoßenden bzw. ziehenden Keile am Messerschaft sehr klein ist. Das führt bei den auftretenden Belastungen zu Verformungen der Keile und nicht zuletzt auch zu Schwingungen an den Messern.

Die Aufgabe der vorliegenden Erfindung ist es, einen Stabmesserkopf vorzuschlagen, der einerseits einfach herstellbar ist und der andererseits eine hohe Qualität des Fräsvorganges gewährleistet. Die Zahl der im Schaftquerschnitt unterschiedlich gestalteten Messer soll gering gehalten werden. Sie sollen sowohl für das Linkshand- als auch für das Rechtshandfräsen einsetzbar sein. Der Austausch und das Einstellen der Messer soll einfach und unkompliziert sein.

Diese Aufgabe wird durch die Merkmale des Anspruches 1 auf überzeugende Weise gelöst. Die teils prismatischen und teils gerundeten Durchbrüche im Messerkopf können mit einem präzisen Bohrvorgang vorbereitet und durch Drahterodieren mit hoher Genauigkeit fertiggestellt werden. Eine evtl. Nacharbeit durch Honen kann mit einem zylindrischen, rotierenden Werkzeug durchgeführt werden. Dadurch erreicht man eine sehr hohe Präzision vor allem derjenigen Abschnitte der Durchbrüche, die für die Lage des Messerkopfes wichtig sind.

Die Rohlinge der Stabmesser mit ihrem halbkreisförmigen Querschnitt können durch Drahterodieren aus zylindrischen Rohlingen hergestellt werden, so dass man in einem Arbeitsgang zwei Rohlinge herstellen kann und den Hartmetallwerkstoff optimal nutzt.

Die keilförmigen Spannmittel haben einen robusten Aufbau und sichern über ihre gesamte Länge eine exakte und schwingungsfreie Führung des Messerschaftes. Die Spannschrauben haben einen einfachen Aufbau. Es können genormte Schrauben verwendet werden.

Der entscheidende Vorteil in dieser Anordnung besteht darin, dass der Messerkopf einstückig hergestellt werden kann und dass alle Arbeitsgänge mit automatisierbaren, üblichen Technologien und Werkzeugen realisierbar sind. Die Zahl der besonders auszubildenden Teile für alle Einsatzfälle kann auf einem niedrigen Niveau gehalten werden.

Mit der Ausführung nach Anspruch 2 ist es möglich, mit einheitlichen Messer-Querschnitten und auch einheitlichen, keilförmigen Spannmitteln unterschiedliche Zahnflanken gleichzeitig zu bearbeiten.

Die Gestaltung der Spannmittel und der Durchbrüche nach Anspruch 3 erlaubt es, die gesamte Spannfläche am Messer für das Fixieren der Messer voll zu nutzen. Schwingungen im Schaft des Messers können auch bei sehr hohen Belastungen vermieden werden.

Die Wirkungen des Anspruches 3 werden weiter verbessert, indem man Spannmittel nach Anspruch 4 verwendet und diesem Spannmittel je zwei Spannschrauben und ein Mittel zum formschlüssigen Fixieren desselben in Achsrichtung zuordnet.

Die Gestaltung der Stabmesser nach Anspruch 5 erlaubt es, den Abfall bei der Herstellung der Rohlinge des Stabmessers auf einem niedrigen Niveau zu halten ohne dass die Qualität ihrer Fräsfunktion nachteilig beeinflusst wird.

Das in Anspruch 6 definierte Spannmittel ist in besonderer Weise zur Komplettierung des in Anspruch 1 definierten Stabmesserkopfes geeignet.

Der unabhängige Anspruch 7 beschreibt eine Variante für Stabmesserköpfe mit einem geometrisch abweichenden Messerkopf unter Nutzung der im Anspruch 1 definierten Mittel für die Befestigung der Stabmesser. Auch in dieser Anordnung der Stabmesser lassen sich vergleichbare Vorteile erreichen, wie sie zu Anspruch 1 beschrieben wurden.

Die Erfindung soll nachstehend an Ausführungsbeispielen näher erläutert werden. In den dazu gehörigen Zeichnungen zeigen:

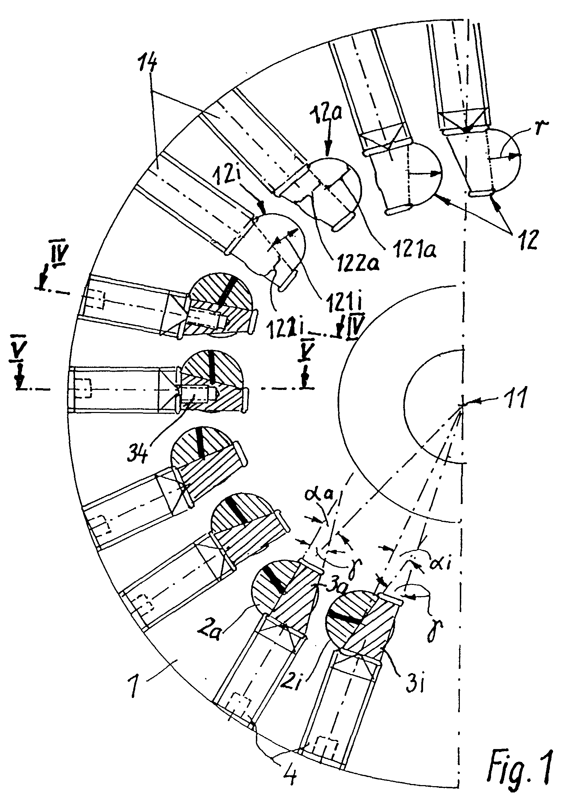

- Fig. 1: eine Teilansicht eines Messerkopfes mit einigen eingesetzten Messern und Spannmitteln, die in der Ebene des Messerkopfes geschnitten sind,
- Fig. 2: eine Kombination aus Stabmesser und Spannmittel für ein außen schneidendes Stabmesser,
- Fig. 3: eine analoge Darstellung zu Fig. 2 für ein innen schneidendes Stabmesser,
- Fig. 4: einen Querschnitt entlang der Linie IV - IV in Fig. 1,
- Fig. 5: einen Querschnitt entlang der Linie V - V in Fig. 1,
- Fig. 6: zwei Ansichten eines Stabmesserkopfes eines innen schneidenden Messers bei Rechtshandbetrieb (RH),
- Fig. 7: eine Darstellung wie Fig. 6 für ein außen schneidendes Messer bei Rechtshandbetrieb (RH),
- Fig. 8: eine Darstellung analog zu Fig. 6 bei Linkshandbetrieb (LH),
- Fig. 9: eine Darstellung analog Fig. 7 bei Linkshandbetrieb (LH) und
- Fig. 10: eine Einsatzvariante für die Stabmesser an einem Fräser, dessen Stabmesser in einem Winkel von 90° zur Achse des Stabmesserkopfes eingesetzt sind.

Der Stabmesserkopf 1 (auch als Messerträger 1 bezeichnet) besteht aus einer rotationssymmetrischen Scheibe, die um eine Achse 11 drehbar gelagert und antreibbar ist. Dieser Stabmesserkopf 1 ist in regelmäßigen Abständen mit unregelmäßig profilierten Durchbrechungen 12 versehen, deren Achsen etwa auf einem Kreisbogen liegen, der um die Achse 11 führt. Die Durchbrechungen 12 sind im Umfangsbereich in Drehrichtung gegenüber der Achse 11 geneigt. Die Art und Weise dieser Neigung ist üblich und braucht in diesem Zusammenhang nicht näher beschrieben zu werden.

Jeder Durchbrechung 12 sind paarweise Gewindebohrungen 14 zugeordnet, die Spannschrauben 4 aufnehmen.

Die Durchbrüche 12 sind abwechselnd mit unterschiedlichen Profilen versehen, wobei das erste Profil des Durchbruches 12a für außen schneidende Stabmesser 20 ausgebildet wurde, während die Profile der Durchbrüche 12i der Spannmittel-Messer-Kombination für innen schneidende Stabmesser 2i dienen.

Alle Durchbrüche 12a, 12i setzen sich aus jeweils zwei Durchbruchabschnitten 121a, 121i; 122a 122i zusammen, von denen ein erster Durchbruchabschnitt 121a, 121i halbkreisförmig ist. Der zweite Durchbruchabschnitt 122a, 122i weist einen im Wesentlichen prismatischen Querschnitt auf.

Die Herstellung solcher Durchbrechungen 12, 12a, 12i lässt sich mit dem Erodierverfahren (Drahterodieren) sehr gut realisieren. Es ist auch möglich, zunächst eine Präzisionsbohrung mit dem Durchmesser des Halbkreises einzubringen und dann die restlichen Konturen mit dem Verfahren des Drahterodierens heraus zu arbeiten.

Die Grenzfläche zwischen den halbrunden und den prismatischen Durchbruchabschnitten 121, 122 ist bei innen und außen schneidenden Stabmessern 2i, 2a voneinander abweichend angeordnet. Bei außen schneidenden Stabmessern 2a ist diese Grenzfläche in Drehrichtung des Stabmesserkopfes 1 zum jeweiligen Radius des Messerkopfes außen um den Winkel αa von etwa 12° nach vorn geneigt. Beim innen schneidenden Stabmesser 2i ist diese Grenzfläche in Drehrichtung des Messerkopfes 1 um den Winkel αi außen nach hinten geneigt.

In diese Durchbrüche 12a, 12i wird im halbkreisförmigen Durchbruchsabschnitt ein im Querschnitt halbkreisförmiges Stabmesser 2a, 2i eingesetzt, während in den prismatischen Durchbruchabschnitt ein Spannmittel 3; 3a, 3i eingefügt wird.

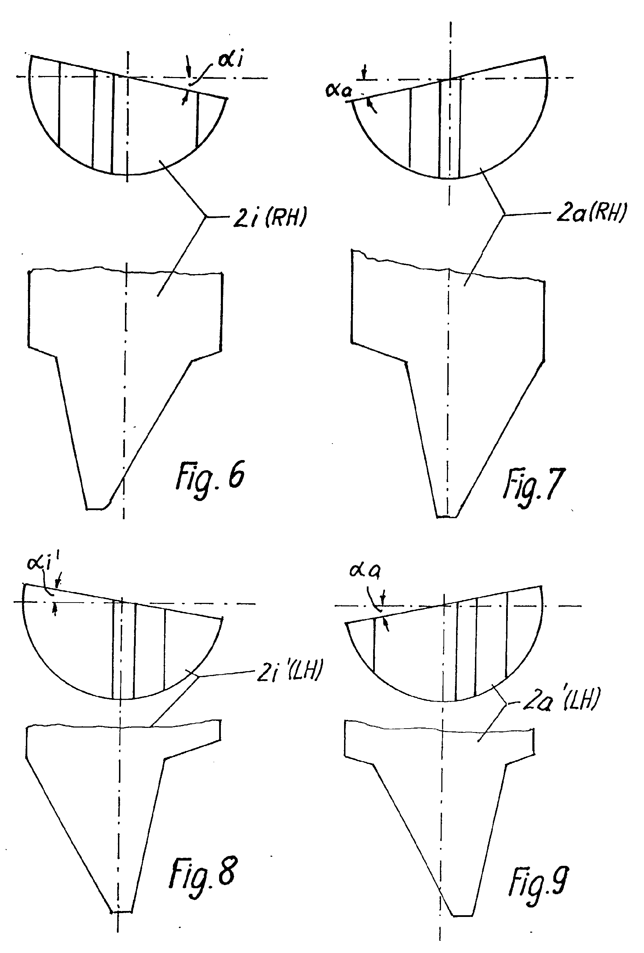

Die Stabmesser 2, 2a, 2i bestehen aus einem halbkreisförmigen Rohling, der mittels Drahterodieren aus einem zylindrischen Hartmetallstab hergestellt wird. Bei dieser Art der Herstellung entstehen aus einem Hartmetallstab regelmäßig zwei identische Stabmesser 2, 2a 2i. An einem der Enden des Stabmesserrohlings wird in Abhängigkeit von der jeweiligen Schneidfunktion des Stabmessers 2a, 2a', 2i, 2i' (Vgl. Fig. 6 bis 9) durch entsprechende Schleifvorgänge der gewünschte Schneidkopf angearbeitet.

Das Spannmittel 3; 3a, 3i hat einen keilförmigen Querschnitt, wobei die zur Spannfläche 33 geneigte Keilfläche 31 einen Winkel bildet, der kleiner ist als 90°, vorzugsweise 75°. Der Winkel der Stützfläche 32 zur Spannfläche 33, an der sich die Spannschrauben 4 abstützen, beträgt regelmäßig 90°. Die Tiefe des Spannmittels 3; 3a, 3i entspricht in etwa dem Durchmesser des Stabmessers 2, 2a, 2i.

Der Durchbruch 12a, 12i hat im prismatischen Durchbruchsabschnitt 122a, 122i innerhalb und außerhalb Freiräume, so dass das Spannmittel 3 in radialer Richtung ausreichende Bewegungsfreiheit zur Ausübung seiner Keilwirkung hat. Das Stabmesser wird stets ausreichend fest fixiert.

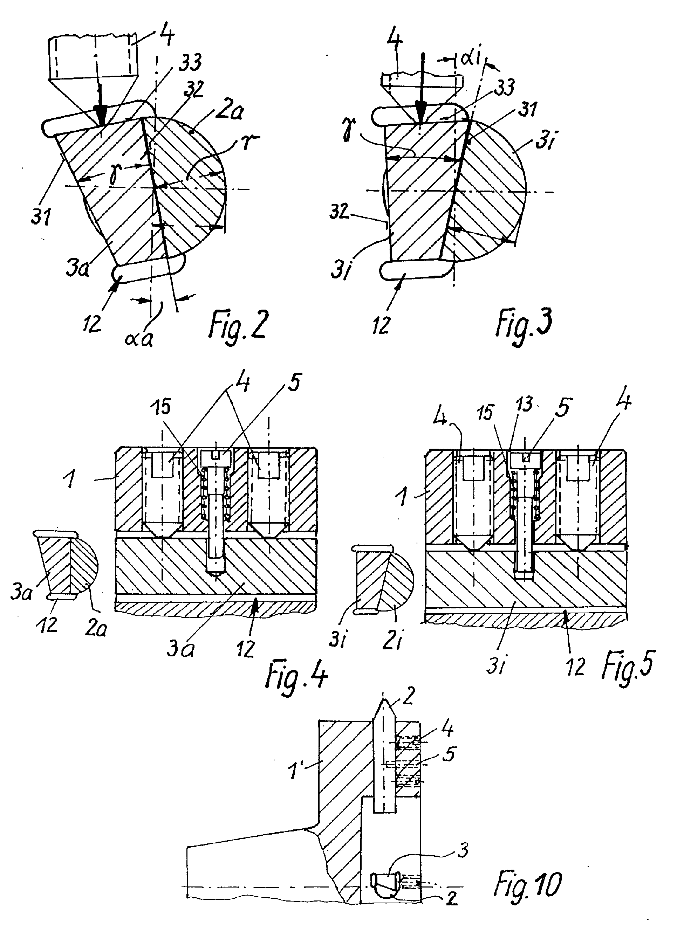

Die Spannmittel 3; 3a, 3i werden mittels Spannschrauben 4 nach innen gepresst und fixieren das Stabmesser 2, 2a, 2i in der durch das Profil des Durchbruches vorgegebenen Position. Die unsymmetrischen Spannmittel 3; 3a, 3i können so eingesetzt werden, dass sich die Stützfläche 32 bei außen schneidenden Stabmessern 2a am Stabmesser 2a abstützt (Fig. 2), während sich bei innen schneidenden Stabmessern 2i die Keilfläche 31 am Stabmesser 2i abstützt. Für unterschiedlich schneidende Stabmesser 2a, 2i können in diesem Fall formgleiche Spannmittel 3 eingesetzt werden. Sie müssen zu diesem Zweck in der Keilebene nur um 180° gedreht werden.

Der Keilwinkel γ der Spannmittel beträgt vorzugsweise 15°. Er kann zwischen 12° und 20° differieren. Diese Größe - außerhalb des selbsthemmenden Bereiches - wurde deshalb gewählt, damit sich das Spannmittel 3 beim Messerwechsel ohne besondere Hilfsmittel lösen lässt.

Zur Lagesicherung der Spannmittel 3; 3a, 3i im Stabmesserkopf 1 wird zunächst im Stabmesserkopf 1 eine Bohrung 13 eingebracht. In diese Bohrung 13 ist eine Zylinderschraube eingesetzt, die vorzugsweise in eine Gewindebohrung 34 im Spannmittel 3 eingreift. Bei dieser Gestaltung sorgt eine Feder 15 dafür, dass bei gelösten Spannschrauben 4 das Spannmittel 3 nach außen gezogen wird und das Stabmesser 2 mühelos entnehmbar ist.

In den Fig. 6 bis 9 ist gezeigt, wie bei dem halbkreisförmigen Querschnitt des Stabmessers durch die entsprechende Ausformung des Schneidkopfes des Stabmessers 2i, 2a, 2i', 2a' so gestaltet werden kann, dass im Bereich der größten Schneidkräfte eine sehr hohe Stabilität gewährleistet werden kann. Aus der Gesamtheit dieser Figuren ist erkennbar, dass die Teile des Kopfes der Stabmesser, die die größten Schnittkräfte aufnehmen, im Bereich der größten Messerhöhe angeordnet sind.

In Abhängigkeit vom jeweiligen Einsatzzweck der Stabmesser 2 oder der Stabmesserköpfe 1 haben sich Stabmesser 2 mit einem Radius zwischen 2,5 mm und 20 mm, vorzugsweise mit 8 mm als brauchbar erwiesen. Günstige Keilwinkel γ der Spannmittel 3 können zwischen 12° und 20° gewählt werden.

Die Spannmittel 3 werden dem jeweiligen Messerquerschnitt angepasst. Die Länge der Spannm ittel 3 kann zwischen 20 mm und 70 mm gewählt werden. Vorzugsweise beträgt sie 40 mm bis 50 mm. Die Spannmittel bestehen meist aus einem harten metallischen Werkstoff.

Es ist ein besonderer Vorteil dieser Art und Weise des Spannens der Stabmesser 2, dass dieselben auch mit einer sehr geringen Einspannlänge noch verwendet werden können, wenn man auf der gegenüberliegenden Seite des Kopfes der Stabmesser ein kurzes Teil eines Stabmessers anstelle des fehlenden Schaftes in den Durchbruch 12, 12a, 12i einführt und mit klemmt.

In Fig. 10 ist ein weiteres Beispiel schematisch dargestellt, das einen Stabmesserkopf 1 für andere Einsatzzwecke zeigt. Hier sind die Stabmesser 2 in einem stirnseitig ringförmig hervortretenden Spannabschnitt eingesetzt. Die Art und Weise der Befestigung der Messer und ihre Anordnung entspricht grundsätzlich derjenigen, die in Bezug auf axial hervorstehende Stabmesser 2 beschrieben wurden.

Es ist natürlich denkbar, dass die Stabmesser 2 auch in jedem anderen Winkel zur Achse des Stabmesserkopfes 1, 1' angeordnet werden können. Man muss jedoch in diesem Fall stets dafür sorgen, dass die Durchbrechungen, so wie vorn bereits beschrieben, mittels Bohrer und mittels Drahterodieren hergestellt werden können und dass die Spannschrauben 4 und die Fixierschrauben 5 für den Bediener von außen zugänglich sind.

Der Vorteil der Gestaltung und Befestigung der Messer nach der vorliegenden Erfindung besteht vor allem darin, dass der Stabmesserkopf 1, 1' aus einem einzigen Stück gefertigt werden kann und dass es möglich ist, die Fläche, die die Lage der Stabmesser 2 bestimmt, mit sehr hoher Präzision zu bearbeiten. Nach dem Bohren und Drahterodieren kann man mit zylindrischen Hon-Werkzeugen die dafür zuständigen Flächen ohne Sonderwerkzeuge exakt bearbeiten.

Schweißvorgänge, die regelmäßig für unterschiedliche Spannungen im Stabmesserkopf sorgen, werden vollständig ausgeschlossen. Die Notwendigkeit von Nachbearbeitungen der Durchbrüche 12 wird weitgehend eingeschränkt.

Für alle Stabmesser 2 werden unabhängig von ihrem jeweiligen Einsatzzweck einheitliche Rohlinge verwendet. Sie werden nur mit unterschiedlichen Köpfen versehen, die durch entsprechende Schleifvorgänge erzeugt werden. Die Herstellung der Stabmesser 2 kann sehr kostengünstig und materialsparend durchgeführt werden.

Ein weiterer sehr entscheidender Vorteil ist, dass dann, wenn man mit scheibenförmigen Stabmesserköpfen arbeitet, durch einfaches Wenden des Messerkopfes von Rechtshandbetrieb (RH) auf Linkshandbetrieb (LH) umstellen kann. Der Stabmesserkopf 1 wird gewendet und die Stabmesser 2 werden in entgegengesetzter Richtung eingesetzt und ausgerichtet.

### Bezugszeichenliste

- 1, 1': Stabmesserkopf
- 11, 11': Achse
- 12: Durchbrüche (allgemein)
- 12a: Durchbruch (f. Stabmesser, außen schneidend)
- 121a: Durchbruchabschnitt (halbrund)
- 122a: Ducrhbruchabschnitt (prismatisch)
- 12i: Durchbruch (f. Stabmesser, innen schneidend)
- 121 i: Durchbruchabschn itt (halbrund)
- 122i: Ducrhbruchabschnitt (prismatisch)
- 13: Bohrung
- 14: Gewindebohrung
- 15: Feder
- 2: Stabmesser (allgemein)
- 2a: Stabmesser (außen schneidend - RH)
- 2a': Stabmesser (außen schneidend - LH)
- 2i: Stabmesser (innen schneidend - RH)
- 2i': Stabmesser (innen schneidend - LH)
- 3: Spannmittel (allgemein)
- 3a: Spannmittel (eingesetzt an innen schneidendem Messer)
- 3i: Spannmittel (eingesetzt an außen schneidendem Messer)
- 31: Keilfläche
- 32: Stützfläche
- 33: Spannfläche
- 34: Gewindebohrung
- 4: Spannschrauben
- 5: Fixierschrauben
- γ: Keilwinkel
- α (a...i): Neigungswinkel
- r: Radius

## Patentansprüche

1. Stabmesserkopf zum Verzahnen von Spiralkegelrädern, bestehend aus einem scheibenförmigen Messerträger
mit im wesentlichen kreisförmig angeordneten, die Scheibe des Messerträgers (1) durchdringenden Durchbrüchen (12), mit unregelmäßigen Querschnitten zur Aufnahme und Führung der Stabmesser (2),
mit Spannschrauben (4) zur Fixierung der Stabmesser (2) im Messerträger (1) und
mit keilförmig ausgebildeten Spannmitteln (3) für die Stabmesser (2) zwischen den Stabmessern (2) und den Spannschrauben (4),
**dadurch gekennzeichnet,**
**dass** sich die Querschnitte der Durchbrüche (12, 12a, 12i) im Messerkopf (1) zusammensetzen
aus einem halbkreisförmigen Durchbruchabschnitt (121a, 121i) mit einem Radius (r) und
aus einem prismatischen Durchbruchabschnitt (122a, 122i) mit überwiegend in radialer Richtung sich nach innen keilförmig einander annähernden Begrenzungsflächen (Keilfläche 31, Stützfläche 32),
**dass** die Rohlinge der Stabmesser (2; 2a, 2a'; 2i, 2i') einen halbkreisförmigen Querschnitt aufweisen, der den gleichen Radius (r) hat, wie der halbkreisförmige Durchbruchabschnitt (121a, 121i),
**dass** Spannmittel (3) parallel zu den Stabmessern (2) ausgerichtete Stäbe mit prismatischem, keilförmigem Querschnitt sind, die dem prismatischen Durchbruchabschnitt (122a, 122i) angepasst sind, und
**dass** die Spannschrauben (4) etwa radial in Gewindebohrungen (14) des Stabmesserkopfes (1) angeordnet und auf die keilförmigen Spannmittel (3) in den prismatischen Durchbruchabschnitten (122a, 122i) ausgerichtet sind.

2. Stabmesserkopf nach Anspruch 1, **dadurch gekennzeichnet,**
**dass** die keilförmigen, prismatischen Durchbruchabschnitte (122a, 122i) entlang ihrer etwa kreisförmigen Anordnung am Stabmesserkopf (1) innerhalb von einzelnen Gruppen im Wechsel auf unterschiedliche Winkel (αa, αi) zum jewiligen Radius des Stabmesserkopfes (1) ausgerichtet sind.

3. Stabmesserkopf nach Anspruch 1, **dadurch gekennzeichnet,**
**dass** die keilförmigen Flächen (Keilfläche 31, Stützfläche 32) der Spannmittel (3) an der dem Schaft der Stabmesser zugewandten Seite eine radiale Erstreckung haben, die etwa dem doppelten Radius (r) des halbkreisförmigen Durchbruchabschnittes (121a, 121i) entsprechen und
**dass** die Querschnitte der Durchbrüche (12a, 12i) innerhalb und außerhalb der Spannmittel 3 Freiräume für eine radiale Bewegung der Spannmittel 3 aufweisen.

4. Stabmesserkopf nach Anspruch 1, **dadurch gekennzeichnet,**
**dass** die prismatischen Spannmittel (3) eine Länge besitzen, die der Dicke des scheibenförmigen Messerträgers (1) entspricht,
**dass** jedem Spannmittel (3) zwei Spannschrauben (4) zugeordnet sind und
**dass** jedes Spannmittel (3) innerhalb des prismatischen Durchbruchabschnittes (122a, 122i) in Achsrichtung lösbar und formschlüssig innerhalb des Durchbruches fixierbar ist.

5. Stabmesser zur Verwendung in einem Stabmesserkopf nach Anspruch 1,
**dadurch gekennzeichnet,**
**dass** der Rohling des Stabmessers (2) einen nahezu halbkreisförmigen Querschnitt aufweist, dessen Sehnenhöhe kleiner ist als der Radius des Halbkreises und
**dass** jeweils zwei Rohlinge, beabstandet durch den Durchmesser eines Erodierdrahtes, mit ihren Querschnitten einen Kreis mit dem Radius (r) eines Halbkreises ausfüllen.

6. Spannmittel zur Verwendung in einem Stabmesserkopf nach Anspruch 1,
**dadurch gekennzeichnet,**
**dass** es aus einem harten metallischen Werkstoff besteht
**dass** der Querschnitt die Form eines unsymmetrischen Trapezes aufweist,
**dass** die einander gegenüberliegenden Keilflächen (Keilfläche 31, Stützfläche 32) des Trapezes zueinander einen nicht selbsthemmenden Winkel zwischen 12° und 20° einschließen und eine Tiefe zwischen 5 mm und 20 mm aufweisen, und
**dass** die Länge des Spannmittels zwischen 20 mm und 70 mm gewählt ist.

7. Stabmesserkopf mit überwiegend radial oder diagonal ausgerichteten Stabmessern, bestehend aus einem Messerträger
mit einem stirnseitig vorstehendem Befestigungsring,
mit einer Vielzahl von etwa radial gerichteten Ausnehmungen mit unregelmäßigem Querschnitt im Befestigungsring für die Stabmesser,
mit Spannschrauben zur Fixierung der Stabmesser am Messerträger und
mit Spannmitteln für die Stabmesser zwischen den Stabmessern und den Spannschrauben,
**dadurch gekennzeichnet,**
**dass** die Ausnehmungen im Befestigungsring im Querschnitt allseitig geschlossene Durchbrüche (12) mit unregelmäßigen Konturen sind,
**dass** sich die Querschnitte der Durchbrüche (12, 12a, 12i) im Messerkopf (1) zusammensetzen
aus einem halbkreisförmigen Durchbruchabschnitt (121a, 121i) mit einem Radius (r) und
aus einem prismatischen Durchbruchabschnitt (122a, 122i) mit überwiegend in radialer Richtung sich nach innen keilförmig einander annähernden Begrenzungsflächen (Keilfläche 31, Stützfläche 32),
**dass** die Rohlinge der Stabmesser (2; 2a, 2a'; 2i, 2i') einen halbkreisförmigen Querschnitt aufweisen, der den gleichen Radius (r) hat, wie der halbkreisförmige Durchbruchabschnitt (121a, 121 i),
**dass** die keilförmigen Spannmittel (3) Stäbe mit prismatischem, keilförmigem Querschnitt sind, die dem prismatischen Durchbruchabschnitt (122a, 122i) angepasst sind und
**dass** die Spannschrauben (4) etwa senkrecht zu den Spannmitteln (3) in Gewindebohrungen (14) des Stabmesserkopfes (1) angeordnet und auf die keilförmigen Spannmittel (3) in den prismatischen Durchbruchabschnitten (122a, 122i) ausgerichtet sind.
